(19) **Europäisches Patentamt European Patent Office Office européen des brevets**

(11) **EP 4 196 522 B1**

(12) # EUROPEAN PATENT SPECIFICATION

(45) Date of publication and mention
of the grant of the patent:
**26.06.2024  Bulletin 2024/26**

(21) Application number: **22716484.5**

(22) Date of filing: **17.03.2022**

(51) International Patent Classification (IPC):
*C08J 11/04* (2006.01)     *A47L 9/24* (2006.01)
*C08L 53/02* (2006.01)     *F16L 11/04* (2006.01)
*B29C 48/03* (2019.01)     *B32B 25/14* (2006.01)
*C08L 23/16* (2006.01)     *F16L 11/08* (2006.01)
*C08L 23/10* (2006.01)     *B32B 5/02* (2006.01)
*B32B 25/10* (2006.01)     *B32B 1/08* (2006.01)

(52) Cooperative Patent Classification (CPC):
(C-Sets available)
**F16L 11/085; B32B 1/08; B32B 5/026;
B32B 25/10; B32B 25/14; C08L 23/10;
C08L 23/16; C08L 53/025; F16L 11/081;**
B29C 48/0016; B29C 48/09; B29C 48/21;
B29K 2105/08; B29L 2023/005; B32B 2250/40;

*(Cont.)*

(86) International application number:
**PCT/IB2022/052422**

(87) International publication number:
**WO 2022/234351 (10.11.2022 Gazette 2022/45)**

(54) **LOW ENVIRONMENTAL IMPACT FLEXIBLE HOSE, AS WELL AS MANUFACTURING METHOD THEREOF**

FLEXIBLER SCHLAUCH MIT GERINGER AUSWIRKUNG AUF DIE UMWELT SOWIE HERSTELLUNGSVERFAHREN DAFÜR

TUYAU FLEXIBLE À FAIBLE IMPACT ENVIRONNEMENTAL, AINSI QUE SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.05.2021  IT 202100011252**

(43) Date of publication of application:
**21.06.2023  Bulletin 2023/25**

(73) Proprietor: **FITT S.p.A
36066 Sandrigo (Vicenza) (IT)**

(72) Inventors:
• **BATTAGLIN, Gianfranco
36066 Sandrigo (VI) (IT)**
• **BATTAGLIA, Luca
36061 Bassano del Grappa (VI) (IT)**

(74) Representative: **Autuori & Partners S.R.L.
Strada del Megiaro, 261
36100 Vicenza (VI) (IT)**

(56) References cited:
**EP-B1- 3 233 451        WO-A1-2019/003130
WO-A2-2011/090759    US-A1- 2011 319 548
US-A1- 2012 070 597    US-B2- 10 578 093**

(52) Cooperative Patent Classification (CPC): (Cont.)
B32B 2270/00; B32B 2272/00; B32B 2274/00;
B32B 2307/536; B32B 2597/00; C08L 2207/04;
C08L 2207/20

C-Sets
**C08L 23/16, C08L 23/12, C08L 91/00, C08K 5/005;**
**C08L 53/025, C08L 23/12;**
**C08L 53/025, C08L 23/12, C08L 91/00, C08K 3/26**

**Description**

Field of the invention

The present invention relates to the technical field of flexible hoses, and in particular it relates to the use of a thermoplastic elastomer with high percentage of post-consumer material for manufacturing at least one layer of low environmental impact flexible hose.

The invention also relates to a flexible hose with at least one layer made with such thermoplastic elastomer, as well as well as a method for manufacturing such flexible hose.

Definitions

In the present document, the expression "post-consumer material" and the derivatives thereof is used to indicate a recycled material, that is reprocessed from recovered material, according to the UNI EN ISO 14021 and UNI EN 15343 standards and possible updates of such standards subsequent to the date of filing of the present document, whose recycling is subject to traceability according to the standards in question.

In the present document, the expression "percentage of post-consumer material" and the derivatives thereof present in a compound or product, is used to indicate the ratio expressed in % between the mass of the recycled post-consumer component or material present in the compound or product and the total of the mass of the compound or product, according to the UNI EN ISO 14021 and UNI EN 15343 standards and possible updates of such standards subsequent to the date of filing of the present document, according to the following formula:

$$\text{(I)} \quad \text{Percentage of post-consumer material (\%)} = \frac{A}{P} \times 100 \quad \%$$

wherein:

- A is the mass of the component/s or of the post-consumer material;
- P is the mass of the compound or product.

In the present document, the expression "at least partially post-consumer" and derivatives relating to a material, is used to indicate the fact that the latter is a material with an amount of post-consumer material equal to at least 90% of the weight thereof.

In the present document, the expression "mineral oil" and the derivatives thereof is used to indicate an oil produced starting from petroleum or derived from chemical synthesis, that is a paraffinic oil.

In the present document, the expression "virgin" and the derivatives thereof relating to a component is used to indicate that the latter has not been subjected to any recycling or regeneration process.

In the present document, the expression "% by weight" relating to one or more components in a composition of interest is used to indicate the percentage of the dry weight of such one or more components with respect to the total dry weight of the composition.

In the present document, the term "matrix" and the derivatives thereof is used to indicate a polymeric material suitable to provide the molecular structure of the finished product.

In the present document, the expression "polymeric material" or the derivatives thereof is used to indicate both the single polymer and a mixture of polymers, for example a blend or a compound.

In the present document, the term "plasticising agent" and the derivatives thereof is used to indicate a compound or a mixture of compounds which can increase the flexibility, processability and extension of the polymer in which it is incorporated. A plasticising agent may reduce the viscosity of the mixture, lower the phase transition temperatures of the second order, and the elastic modulus of the product.

In the present document, the expression "additive" and the derivatives thereof is used to indicate a substance which, when added to a compound, improves one or more characteristics thereof.

In the present document, the term "stabilising agent" and the derivatives thereof is used to indicate a compound or a mixture of compounds which can intercept small molecules resulting from the degradation of the polymer, to form a more stable intermediate compound.

In the present document, the expression "antioxidant agent" and the derivatives thereof is used to indicate a compound or a mixture of compounds capable of inhibiting thermo-oxidative and photooxidative reactions by reducing and/or hindering, for example, the formation of radical reactions and free radicals.

In the present document, the expression "filler" and the derivatives thereof is used to indicate solid materials made of particles or fibrous materials, substantially chemically inert, with the function of fillers.

In the present document, the expression "bulking agent" and the derivatives thereof is used to indicate a compound or a mixture of compounds embedded in a polymer to improve the performance thereof relating, for example, to resistance and elasticity.

In the present document, the expression "textile reinforcement layer" or "reinforcement layer" or the derivatives thereof is used to indicate a layer consisting of at least one textile yarn arranged on the underlying layer. The "reinforcement layer" is arranged on the load-bearing layer so as to leave portions thereof - generally square, rectangular or rhomboidal-shaped - vacant.

In the present document, the expression "cross-hatched textile layer" or "cross-hatched layer" or "cross-hatching" or the derivatives thereof is used to indicate a layer consisting of at least two yarns or groups of yarns spiral-wound on the load-bearing layer with opposite inclinations and mutually superimposed but not connected. Therefore, a cross-hatching consists of two or more superimposed spirallings.

In the present document, the expression "knitted textile layer" or "knitted layer" or "knitting" or the derivatives thereof is used to indicate a layer consisting of at least two yarns or groups of yarns deposited on the load-bearing layer and connected together to form a plurality of chain stitches, known as "tricot" type stitches.

State of the Art

The use of thermoplastic elastomers, for example TPE-s or TPV, to manufacture reinforced or spiralled flexible hoses, in which part of the polymer matrix is recycled, is known.

For example, the polypropylene contained in such matrix is a post-consumer material and it is therefore present both in the elastomer and in the hose made starting from the latter.

However, the percentage of post-consumer material present in the hose is extremely limited, due to the low presence of polypropylene.

Furthermore, manufacturing hoses starting from thermoplastic elastomers with a limited presence of oil is known. However, they are very expensive and with high hardness.

On the other hand, thermoplastic elastomer formulations containing oil have an oil mainly of the mineral type.

The result is an overall considerable environmental and economic impact linked both to the production chain of the hose and to the disposal thereof.

Furthermore, from WO 2011/090759 A2 the features of the preamble of claim 1 are known.

From US 10578093 B2, US 2012/070597, WO 2019/003130 A1, EP 3233451 B1 hoses made with a thermoplastic elastomer composition are known.

From US 2011/319548 A1 a thermoplastic elastomer composition is known.

Summary of the invention

The object of the present invention is to overcome the drawbacks outlined above by providing a flexible hose that is highly effective and relatively cost-effective.

A further object of the present invention is to provide a low environmental impact flexible hose.

A further object of the present invention is to provide a low environmental impact flexible hose with mechanical and quality properties comparable to a flexible hose according to the state of the art.

A further object of the present invention is to provide a flexible hose with relatively low manufacturing and/or disposal costs.

These and other objects which will be more apparent hereinafter, are attained using a thermoplastic elastomer for providing at least one layer of a flexible hose according to claim 1.

In a further aspect of the invention, a flexible hose and a method for manufacturing the same may be provided according to claims 8 and 14.

Generally, the hoses according to the present invention may be useful for transporting any fluid, in particular any liquid.

In particular, the flexible hose may be a reinforced or non-reinforced irrigation hose or garden hose for transporting water, for example drinking water, or it may be a spiralled flexible hose for transporting water in swimming pool or SPA facilities.

The thermoplastic elastomer used in the present invention consists of:

(A) at least 30% by weight of a polymer matrix consisting of a thermoplastic part (A1) and an elastomeric part (A2), present in the thermoplastic elastomer in a by weight percentage respectively from 10% by weight to 35% by weight and from 20% by weight to 45% by weight;

(B) from 30% by weight to 55% by weight of at least one plasticising agent;

(C) from 0% to 30% by weight of at least one filler;
(D) from 0% to 10% by weight of at least one additive.

The total sum of the % by weight of the components from (A) to (D) is 100%.

It should be observed that the % by weight are calculated with respect to the total weight of the thermoplastic elastomer.

The thermoplastic elastomer has a Shore A hardness measured according to the UNI EN ISO 868 standard comprised between 50 Sh A and 85 Sh A, and preferably comprised between 65 Sh A and 75 Sh A.

Furthermore, the thermoplastic elastomer has a percentage of post-consumer material greater than or equal to 50% by weight with respect to the total weight of the thermoplastic elastomer.

Suitably, the thermoplastic elastomer is present in an amount greater than or equal to 90% by weight on the total weight of the hose made starting from the thermoplastic elastomer.

Therefore, by using the aforementioned thermoplastic elastomer to manufacture one or more layers of the flexible hose, the latter comprises at least 45% by weight of post-consumer material, thus resulting in low environmental impact.

Generally, the post-consumer material may be defined by any component of the thermoplastic elastomer.

For example, in a first case the plasticising agent (B) may define the totality of the post-consumer material present in the thermoplastic elastomer, while the polymer matrix (A) may be virgin material.

In a second case, the post-consumer material present in the thermoplastic elastomer may be defined by the plasticising agent (B) and the thermoplastic part (A1).

In the first case, the plasticising agent (B) may be at least partially a post-consumer material for an amount ranging from 90% of the weight thereof to 100% of the weight thereof, that is, a plasticising agent (B) consisting of post-consumer material for 90% - 100% of the weight thereof and of virgin material for 10% - 0% of the weight thereof.

Therefore, should the plasticising agent (B) be a post-consumer material for 100% of the weight thereof and be present in the thermoplastic elastomer in an amount equal to 50% by weight of the thermoplastic elastomer, the plasticising agent (B) alone may define an amount of post-consumer material equal to 50% by weight with respect to the total weight of the thermoplastic elastomer, calculated according to the formula (I) according to the UNI EN ISO 14021 standard, wherein:

- A is equal to 50% x 100;
- P is equal to 100.

On the other hand, should the plasticising agent (B) be a post-consumer material for 90% of the weight thereof and be present in the thermoplastic elastomer in an amount equal to 50% by weight of the thermoplastic elastomer, the plasticising agent (B) alone may define an amount of post-consumer material equal to 50% by weight with respect to the total weight of the thermoplastic elastomer, calculated according to the formula (I) according to the UNI EN ISO 14021 standard, wherein:

- A is equal to 55% x 90;
- P is equal to 100.

In the light of the above, both the thermoplastic part (A1) and the plasticising agent (B) may define the post-consumer material present in the thermoplastic elastomer.

For example, both the thermoplastic part (A1) and the plasticising agent (B) may be at least partially post-consumer materials, that is both post-consumer materials for a minimum amount equal to 90% of the respective weight.

This means that a thermoplastic part (A1) and a plasticising agent (B) may be considered each from 90% to 100% of the weight thereof from post-consumer material and from 10% to 0% of the weight thereof from virgin material, respectively.

For example, should the thermoplastic part (A1) and the plasticising agent (B) be made of post-consumer material for 90 % of the respective weight and should the thermoplastic part (A1) and the plasticising agent (B) form at least 55 % by weight of the total of the thermoplastic elastomer, the post-consumer material present in the thermoplastic elastomer may be in a minimum amount of 50%, calculated using the formula (I), wherein:

- A is equal to 55% x 90;
- P is equal to 100.

On the other hand, both the thermoplastic part (A1) and the plasticising agent (B) may be at least partially post-consumer materials, for example for an amount equal to 100% of the weight thereof.

As a result, the thermoplastic part (A1) and the plasticising agent (B) may form at least 50% by weight of the total of the thermoplastic elastomer.

Therefore, the post-consumer material present in the thermoplastic elastomer may be in a minimum amount of 50% calculated using the formula (I), wherein:

- A is equal to 50% x 100;
- P is equal to 100.

Based on these observations, there may therefore be considered an amount of post-consumer material and virgin material in the thermoplastic part (A1) and/or in the plasticiser (B), which varies from 90% by weight to 100% by weight of each of these components so as to reach a percentage of post-consumer material greater than or equal to 50% by weight on the total weight of the elastomer.

Preferably, the elastomeric part (A2) may be a rubber.

As known, in order to obtain a substantially high hardness, in the order of 50 - 85 Sh A, there arises the need to balance the thermoplastic part (A1), the elastomeric part (A2) and the plasticising agent (B).

Therefore, the by weight ratio between the thermoplastic part (A1) and the elastomeric part (A2) may be comprised between 0.2 and 1.5 and more preferably between 0.4 and 0.7.

Furthermore, the by weight ratio between the elastomeric part (A2) and the plasticising agent (B) may be comprised between 0.4 and 1.7, and more preferably between 0.6 and 0.9.

In addition, in order to obtain a percentage of post-consumer material greater than or equal to 50% by weight in the thermoplastic elastomer, there arises the need to limit the presence of the elastomeric part (A2), in favour of the plasticising agent (B) content.

As known, the elastomeric part (A2) and the plasticising agent (B) confer opposite mechanical qualities to the thermoplastic elastomer, given that the elastomeric part (A2) tends to increase the hardness thereof, as opposed to the plasticising agent (B).

Therefore, should the thermoplastic elastomer contain a significant amount of plasticising agent (B) in order to obtain a percentage of post-consumer material greater than or equal to 50% by weight, but at the same time should there be an insufficient amount of elastomeric part (A2) to obtain hardness in the order of 50 - 85 Sh A, the presence of an appropriate amount of a filler (C) may be considered.

By way of example, reported below is a first formulation, relating to a TPE-s, whose percentages by weight of the components allow to obtain a percentage of post-consumer material greater than or equal to 50% by weight of the thermoplastic elastomer and hardness in the order of 50 - 85 Sh A, balancing the thermoplastic part (A1), the elastomeric part (A2), the plasticising agent (B) and the filler (C).

The thermoplastic elastomer may have the following composition:

(A1) from 15% by weight to 25% by weight of a thermoplastic part;
(A2) from 25% by weight to 35% by weight of an elastomeric part;
(B) from 30% by weight to 40% by weight of at least one plasticising agent;
(C) from 10% to 30% by weight of at least one filler;
(D) from 0% to 5% by weight of at least one additive;

wherein the thermoplastic part (A1) and the elastomeric part (A2) form the polymer matrix (A) and wherein the % by weight are calculated with respect to the total weight of the thermoplastic elastomer.

Reported below is a second formulation, relating to a TPE-s, whose percentages by weight of the components allow to obtain a percentage of post-consumer material greater than or equal to 50% by weight of the thermoplastic elastomer and hardness in the order of 50 - 85 Sh A, balancing the thermoplastic part (A1), the elastomeric part (A2) and the plasticising agent (B).

The thermoplastic elastomer may have the following composition:

(A1) from 15% by weight to 25% by weight of a thermoplastic part;
(A2) from 30% by weight to 40% by weight of an elastomeric part;
(B) from 40% by weight to 50% by weight of at least one plasticising agent;
(C) from 0% to 15% by weight of at least one filler;
(D) from 0% to 5% by weight of at least one additive;

wherein the thermoplastic part (A1) and the elastomeric part (A2) form the polymer matrix (A) and wherein the % by weight are calculated with respect to the total weight of the thermoplastic elastomer.

According to a third preferred but not exclusively formulation, relating to a TPV, the percentages by weight of the components allow to obtain a percentage of post-consumer material greater than or equal to 50% by weight of the thermoplastic elastomer and hardness in the order of 50 - 85 Sh A, balancing the thermoplastic part (A1), the elastomeric part (A2) and the plasticising agent.

The thermoplastic elastomer may have the following composition:

(A1) from 15% by weight to 30% by weight of a thermoplastic part;
(A2) from 30% by weight to 40% by weight of an elastomeric part;
(B) from 30% by weight to 40% by weight of at least one plasticising agent;
(C) from 0% to 25% by weight of at least one filler;
(D) from 0% to 5% by weight of at least one additive;

wherein the thermoplastic part (A1) and the elastomeric part (A2) form the polymer matrix (A) and wherein the % by weight are calculated with respect to the total weight of the thermoplastic elastomer.

The thermoplastic part (A1) may be polypropylene or polyethylene at least partially post-consumer, that is at least for 90% by weight on the total of thermoplastic part (A1) as described above.

For example, post-consumer polypropylene may have the following characteristics:

- specific weight: 0.90 - 0.935 g / cm 3 according to the ASTM D792 standard;
- *Melt Flow* at 230°C /2.16kg: 8 - 12 g / 10 min according to the ASTM D1238 standard;
- extension: 8% - 12% according to the D638 standard;
- flexural modulus: 130,000 - 190,000 psi according to the D790 standard.

Preferably, the elastomeric part (A2) may be mainly a SEBS, SBS, SEPS, SEEPS, SIPS, SIS, EPDM rubber, butene or linear alpha olefins.

The thermoplastic elastomer may be:

- TPE-S in which the thermoplastic part (A1) is polypropylene or polyethylene and the elastomeric part (A2) is a SEBS, SBS, SEPS, SEEPS, SIPS, SIS rubber;
- TPV wherein the thermoplastic part (A1) is polypropylene and the elastomeric part (A2) is an EPDM rubber;
- TPE-O, POE or POP wherein the thermoplastic part (A1) is polypropylene or polyethylene and the elastomeric part (A2) is butene or linear alpha olefin or a polypropylene elastomer produced through metallocene catalysis.

In greater detail, the thermoplastic elastomer may be a TPE-S such as for example Nilflex SHR® marketed by Taro Plast SpA.

Even more in detail, the thermoplastic part (A1) may be SJP615 100% Post-Consumer Polypropylene marketed by St. Joseph Plastics, whereas the elastomeric part (A2) may be for example Vistalon 3702 marketed by Exxonmobil Corporation, or KRATON G 1651 marketed by Kraton Corporation.

Suitably, the plasticising agent (B) may be a mineral, synthetic and/or vegetable oil.

Preferably, the plasticising agent (B) may be a mineral oil at least partially post-consumer, that is, as specified above, for at least 90% by weight on the total of plasticising agent (B).

For example, there may be provided for the use of 90% by weight of the total plasticising agent (B) of post-consumer mineral oil and 10% by weight on the total plasticising agent (B) of virgin mineral and/or synthetic and/or vegetable oil.

Preferably, the post-consumer mineral oil may be obtained by means of a per se known regeneration process.

Among the regeneration processes, the following techniques may be provided for: acid clay re-refining, sulfuric acid-activated clay technologies, vacuum distillation, evaporation, technologies based on hydrogenation, ultrafiltration, extraction-based technologies.

In particular, according to a preferred but not exclusive example, the post-consumer mineral oil may have the following characteristics:

- density at 15°C according to the ASTM D 4052 standard equal to 0.86 - 0.88 Kg/L;
- viscosity at 40°C according to the ASTM D 445 standard equal to 30 - 34 $mm^2$/s;
- viscosity at 100°C according to the ASTM D 445 standard equal to 5.2 - 5.3 $mm^2$/s;
- viscosity index according to the ASTM D 2270 equal to 95 - 110.
- polycyclic aromatic content according to the IP 346 standard less than or equal to 3% by weight.

Preferably, the mineral oil may be obtained by means of hydrogenation.

For example, the oil could be ORV 150 marketed by Bergoil.

Fillers (C) or additives (D) such as for example stabilising agents, antioxidant agents, dyeing agents may be considered.

More particularly, among additives (D) for example there may be considered external and/or internal lubricants, heat stabilizers, UV stabilisers, pigments, antioxidants, antimicrobials, release agents, fungicides, antibacterial agents, process adjuvants, anti-static agents.

Some types of stabilising agents may be for example of the antioxidant type.

For example, Irganox® B 225 marketed by BASF, or Irganox® 1076 and Irgafos® 168 marketed by Ciba, or peroxides such as Trigonox® 101-40D, Trigonox® 145-45B, Perkadox® 14-40B, or cross-linking agents such as Triallylcyanurate (TAC) marketed by Akzo Nobel Polymer Chemicals B.V. may be used.

Advantageously, the dyeing agent may be selected from natural food colorants.

Furthermore, any type of per se known filler (C) may be used, for example bulking agents such as calcium carbonate, talc, kaolin, mica, feldspar, wollastonite, natural silica, ceramic or glass microbeads, fibres.

If present, the bulking agent may be present in an amount less than 30% by weight so as to keep the obtained hose light and easy to handle.

According to an aspect of the invention, the thermoplastic elastomer described above, containing at least 50% by weight of post-consumer material, may be used to provide one or more layers of a flexible hose, whether reinforced or not or spiralled.

In particular, as described above, the thermoplastic elastomer according to the invention will form at least 90% by weight on the total weight of the flexible hose. In other words, the one or more layers of the flexible hose formed by the aforementioned thermoplastic elastomer may have an overall weight equal to or greater than 90% by weight of the flexible hose.

Therefore, the % by weight of post-consumer material inside the flexible hose may be at least 45% with respect to the total weight of the hose.

Without focusing too much on theory, it can be established that a flexible hose which includes a % by weight of post-consumer material according to the UNI EN ISO 14021 and UNI EN 15343 standards lower than 45% (excluded) with respect to the total weight of the hose does not fall within the scope of protection of the present invention.

As a matter of fact, such flexible hose would have an unacceptably high environmental impact.

The flexible hose may include one or more layers, and it may be reinforced or not or spiralled.

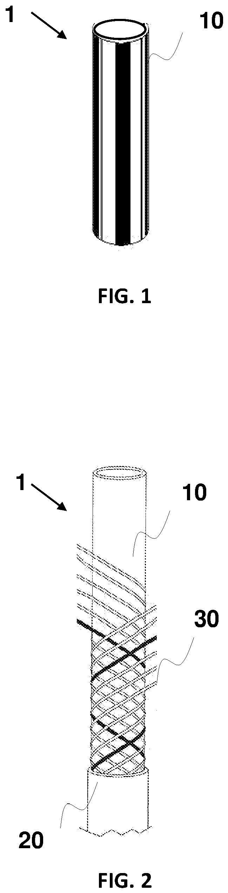

According to a first example, shown in **FIG.**1, the flexible hose **1** may have a single layer **10** in contact with the fluid to be transported and which can be gripped by a user, made of the thermoplastic elastomer described above, which will therefore be present for 100% by weight on the weight of the hose **1.**

Therefore, the hose **1** may have a percentage of post-consumer material greater than or equal to 50%, calculated according to the formula (I), wherein:

- A is equal to 50% x 100: the post-consumer material is present in the entire hose;
- P is equal to 100.

According to a further example, **FIG. 2** illustrates a multilayer flexible hose of the reinforced type **1** for transporting liquids, which may have a first layer **10** at contact with the fluid to be transported, a second outer layer **20** which can be gripped by a user and at least one textile reinforcement layer **30** interposed between the first layer **10** and the second layer **20.**

As known, the one or more textile reinforcement layers **30** may be knitted or cross-hatched, in a per se known manner.

In a preferred but non-exclusive embodiment, one or both layers **10** and **20** may be made of the thermoplastic elastomer described above, while the one or more textile reinforcement layers **30** may be made of virgin material. In this case, the presence of post-consumer material in the layers will define the post-consumer material of the hose **1.**

Suitably, both layers **10** and **20** may be made starting from the same thermoplastic elastomer formulation according to the invention, or the layer **10** may be made of a thermoplastic elastomer formulation according to the invention and the layer **20** may be a different thermoplastic elastomer or vice versa, or the layer **10** may be made of a first formulation of the thermoplastic elastomer according to the invention and the layer **20** may be made of a second different formulation of the thermoplastic elastomer according to the invention.

In this regard, purely by way of example, the layer **10** may be a TPE-s with a percentage of post-consumer material greater than or equal to 50% by weight, whereas the layer **20** may be a TPV with a percentage of post-consumer material greater than or equal to 50% by weight or vice versa.

According to a preferred but not exclusive embodiment, the layers **10** and **20** may define 100% by weight of the hose **1,** that is the hose **1** will be without yarn.

For example, considering two layers **10** and **20** each made of the thermoplastic elastomer according to the invention having a percentage of post-consumer material of 50%, the total percentage of post-consumer material of the hose **1** will be equal to 50%, calculated using the formula (I), wherein:

- A is equal to 50% x 100: the post-consumer material is present in the entire hose;
- P is equal to 100.

In general, the same thermoplastic elastomer can be present in the hose **1** in a percentage equal to at least 90% by weight of the latter.

As a result, the layers **10** and **20** may define at least 90% by weight of the hose **1** and both may be made of the thermoplastic elastomer according to the invention, as described above.

In case of a reinforced flexible hose, the hose **1** may comprise one or more reinforcement layers **30.**

In case of a reinforced flexible hose with a single reinforcement layer for example made of virgin yarn and defining 3% by weight of the hose **1,** the layers **10** and **20** may define 97% by weight of the hose **1.**

Therefore, considering - as described above - two layers **10** and **20** each made of the thermoplastic elastomer according to the invention having a percentage of post-consumer material of 50%, the total percentage of post-consumer material of the hose **1** will be equal to 48.5%, calculated using the formula (I), wherein:

- A is equal to 50% x 97: the post-consumer material is present in the layers **10** and **20** alone;
- P is equal to 100.

Should the reinforcement layer **30** be made of a post-consumer material, the percentage of post-consumer material present in the hose **1** will be greater than 48.5%.

As a matter of fact, for example considering two layers **10** and **20** each made of the thermoplastic elastomer according to the invention having a percentage of post-consumer material of 50% and a percentage of post-consumer material from 30% to 100% in the reinforcement layer **30,** the total percentage of post-consumer material of the hose **1** will be equal to 49.4% - 51.5 %, calculated using the formula (I), wherein:

- A is equal to A' (50% x 97) + A" (in a range from 30% - 100% x 3), where A' refers to the mass of post-consumer material in the layers **10** and **20,** while A" relates to the range of possible mass of post-consumer material in the reinforcement layer **30;**
- P is equal to 100.

According to a further preferred but not exclusive embodiment, the hose **1** may comprise a reinforcement layer **30** made of virgin yarn defining 10% by weight of the hose, while the layers **10** and **20** may define 90% by weight.

Therefore, considering two layers **10** and **20** each made of the thermoplastic elastomer according to the invention having a percentage of post-consumer material of 50%, the total percentage of post-consumer material of the hose **1** will be equal to 45%, calculated using the formula (I), wherein:

- A is equal to 50% x 90: the post-consumer material is present in the layers **10** and **20** alone;
- P is equal to 100.

Should the reinforcement layer **30** be made of a post-consumer material, the percentage of post-consumer material present in the hose **1** will be greater than 45%.

As a matter of fact, for example considering two layers **10** and **20** each made of the thermoplastic elastomer according to the invention having a percentage of post-consumer material of 50% and a percentage of post-consumer material from 30% to 100% in the reinforcement layer **30,** the total percentage of post-consumer material of the hose **1** will be equal to 45.9% - 55 %, calculated using the formula (I), wherein:

- A is equal to A' (50% x 90) + A" (in a range from 30% x 3 to 100% x 3), where A' refers to the mass of post-consumer material in the layers **10** and **20,** while A" refers to the range of possible mass of post-consumer material in the reinforcement layer **30;**
- P is equal to 100.

In particular, the reinforcement layer **30** may be made of a virgin or post-consumer polymer, selected from: PET, PP, polyamide, PE, PVA, PLA, aramid fibres, polyurethane.

For example, a textile reinforcement layer **30** made of post-consumer polyester may have the following characteristics:

- linear density: 1012 - 1237 dtex according to the BISFA standard;

- tensile strength: 76 - 93 N according to the BISFA standard;
- mean tenacity: 68 - 83 cN/tex according to the BISFA standard;
- elongation at a specific force (45 N): 4 - 5 % according to the BISFA standard;
- elongation at break: 10 - 12% according to the BISFA standard;
- hot air shrinkage (180°C, for 2 minutes, 0.5 CN/tex): 7 - 9% according to the ASTM D4974 standard.

In a per se known manner, the flexible hose **1** may be made by extruding the thermoplastic elastomer to obtain the layer **10** or the pair of layers **10** and **20,** with the interposition of the reinforcement layer **30.**

In particular, the layers **10** and **20** may be extruded by means of a single-screw or twin-screw extruder per se known, with a specific particularly compact extrusion head with length equal to about 100 - 110 mm and an outlet neck with length equal to 35 - 40 mm.

Therefore, a high compression may be imparted into the exiting molten material, making it homogeneous, without breakage, with a significant dimensional stability.

As a result, the potential difficulties present during the extrusion of the thermoplastic elastomer due to the presence of post-consumer materials which may lead to a greater fluidity thereof, may be overcome with such solution.

It is clear that the reinforced flexible hose described above may also include further layers, whether polymeric or reinforcement, without departing from the scope of protection of the attached claims.

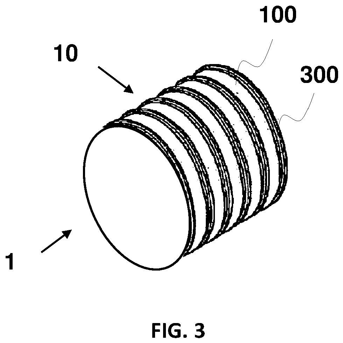

The spiralled flexible hose **1** according to the present invention regarding which a portion is shown in **FIG. 3** by way of example, may include a layer **10** consisting of a wall **100** made of the thermoplastic elastomer described above and at least one reinforcement spiral **300** embedded into the wall **100.**

It is clear that internally or externally with respect to the wall **100,** one or more layers having any function, for example an internal protection film, may be present without departing from the scope of protection of the attached claims.

Preferably, the reinforcement spiral **300** may be made of thermoplastic polymer, for example polypropylene or high-density polyethylene or a co-polymer polypropylene.

According to a preferred but not exclusive embodiment, the wall **100** and the reinforcement spiral **300** may be in a 1:1 by weight ratio.

Therefore, assuming a thermoplastic elastomer which includes % by weight of post-consumer material greater than or equal to 50%, the hose **1** may comprise a percentage of post-consumer material greater than or equal to 25%, calculated using the formula (I), wherein:

- A is equal to 50% x 50: the post-consumer material is present in the wall **100** alone;
- P is equal to 100.

However, should the reinforcement spiral **300** be made of thermoplastic polymer having a % by weight of post-consumer material greater than or equal to 90%, the percentage of post-consumer material of the hose **1** is greater than or equal to 70%, calculated using the formula (I), wherein:

- A is equal to A' (50% x 50) + A" (50% x 90), where A' is the mass of post-consumer material present in the wall **100,** while A" is the mass of post-consumer material present in the reinforcement spiral **300;**
- P is equal to 100.

For example, the post-consumer thermoplastic polymer may be polypropylene with the aforementioned characteristics.

In a per se known manner, the spiralled flexible hose **1** may be obtained by extruding a webbing having a core of a thermoplastic polymer forming the spiral **300,** for example polypropylene, and a wall **100** of the aforementioned thermoplastic elastomer into which the core is embedded.

Subsequently, in a per se known manner, the webbing may be spiral-wound on a spindle joining the side walls thereof to obtain the layer **10** which forms the hose **1.**

It is therefore clear that in this manner the layer **10** may consist of the wall **100** into which the spiral **300** is embedded.

On the other hand, the spiralled flexible hose **1** may be obtained by extruding - in a per se known manner - a webbing having a thermoplastic polymer core forming the spiral **300,** for example polypropylene, and a wall **100** of the aforementioned thermoplastic elastomer, and one or more per se known protection layers designed to come into contact with the transported fluid.

Therefore, the webbing may be spiral-wound on a spindle joining the side walls thereof to obtain the layer **10** which forms the hose **1.**

It is therefore clear that in this manner the layer **10** may comprise the wall **100** into which the spiral **300** is embedded and it may also include one or more protection layers designed to come into contact with the transported fluid. In other words, the layer **10** may consist of the wall **100** into which the spiral **300** is embedded and of the one or more protection layers.

The invention will be described in greater detail with reference to the following examples which, in any case, shall not be deemed to limit the scope of protection of the invention.

*Examples*

*Example 1 - preparation of TPE-S samples*

Some samples of thermoplastic elastomers TPE-S were prepared.

1.1 The raw materials used to prepare the samples of TPE-S with post-consumer thermoplastic part (A1) and virgin plasticising agent (B) were:

 (A) polymer matrix:

  (A1) thermoplastic part: SJP615 100% Post-Consumer Polypropylene marketed by St. Joseph Plastics, with MFI 10 g / 10 min at 230°C and 2.16 kg;
  (A2) elastomeric part: Kraton G 1651 marketed by Kraton;

 (B) plasticiser agents: Primol 352 mineral oil marketed by ExxonMobil;
 (C) additives:

  Calcium carbonate marketed by Omya;
  Irganox ®B 225 marketed by BASF;
  Crodamide marketed by CRODA Industrial Chemicals.

Polypropylene has a percentage of post-consumer material equal to 100% by weight with respect to the total weight of the thermoplastic part (A1) present.

The formulations, which were prepared by means of a twin-screw mixer/extruder, are reported in table 1 below.

**TABLE 1**

| | THERMOPLASTIC ELASTOMER 1A | | THERMOPLASTIC ELASTOMER 2A | | THERMOPLASTIC ELASTOMER 3A | |
|---|---|---|---|---|---|---|
| TYPE | COMPONENT | % BY WEIGHT | COMPONENT | % BY WEIGHT | COMPONENT | % BY WEIGHT |
| A1 | Polypropylene | 17 | Polypropylene | 19.6 | Polypropylene | 16.6 |
| A2 | SEBS | 28 | SEBS | 34 | SEBS | 33 |
| B | Mineral oil | 34.6 | Mineral oil | 46 | Mineral oil | 50 |
| C Filler | Calcium carbonate | 19.5 | / | / | / | / |
| C Stabilising agent | Irganox | 0.4 | Irganox | 0.4 | Irganox | 0.4 |
| C Lubricant | Crodamide | 0.5 | / | / | / | / |
| % post-consumer material | / | 17 | / | 19.6 | / | 16.6 |

In particular, thermoplastic elastomers 1A and 2A are two Nilflex® SHR formulations marketed by Taro Plast.

1.2 The raw materials used to prepare the samples of TPE-S with thermoplastic part (A1) and post-consumer plasticising agent (B), were:

- for components A (A1, A2), C: reference shall be made to par. 1.1;

- component B: ORV 150 mineral oil marketed by Bergoil.

The formulations, which were prepared by means of a twin-screw mixer/extruder, are the same as in table 1.
Therefore, the thermoplastic elastomer 1B, thermoplastic elastomer 2B, thermoplastic elastomer 3B samples respectively corresponding to the thermoplastic elastomer 1A, thermoplastic elastomer 2A, thermoplastic elastomer 3A samples were obtained, with the use of post-consumer oil in a percentage equal to 100% by weight with respect to the total weight of the plasticising agent (B) present.
Therefore, the percentages of post-consumer material present in samples 1B, 2B, 3B are obtained from the sum of the content by weight of the thermoplastic part (A1) and of the plasticising agent (B), as reported in table 2.

**TABLE 2**

| | THERMOPLASTIC ELASTOMER 1B | | THERMOPLASTIC ELASTOMER 2B | | THERMOPLASTIC ELASTOMER 3B | |
|---|---|---|---|---|---|---|
| TYPE | COMPONENT | % BY WEIGHT | COMPONENT | % BY WEIGHT | COMPONENT | % BY WEIGHT |
| A1 | Polypropylene | 17 | Polypropylene | 19.6 | Polypropylene | 16.6 |
| B | Mineral oil | 34.6 | Mineral oil | 46 | Mineral oil | 50 |
| % post-consumer material | / | 51.6 | / | 65.6 | / | 66.6 |

*Example 2 - Comparison of quality and mechanical characteristics between the TPE-S samples with virgin and post-consumer oil*

The samples described in paragraphs 1.1 and 1.2 of example 1 were compared in terms of:

- density according to the EN ISO 1183 standard;
- Sh A hardness according to the EN ISO 868 standard;
- tensile strength according to the ASTM D 638 standard;
- elongation at break according to the ASTM D 638 standard.

The results are reported in table 3:

**TABLE 3**

| SAMPLE | DENSITY (g/cm$^3$) | HARDNESS (Sh A) | TENSILE STRENGTH (MPa) | ELONGATION AT BREAK (%) |
|---|---|---|---|---|
| 1A | 1.05 | 72 | 7.5 | 750 |
| 2A | 0.89 | 74 | 9.3 | 768 |
| 3A | 0.88 | 52 | 7.2 | 747 |
| 1B | 1.06 | 74 | 7.8 | 720 |
| 2B | 0.90 | 72 | 8.9 | 793 |
| 3B | 0.89 | 51 | 7.4 | 742 |

According to the relative standards, the aforementioned parameters have the following variability tolerance:

density: ± 0.02 g/cm3
hardness: ± 3 Sh A
tensile strength: ± 5%
elongation at break: ± 5%

Therefore, the samples obtained with virgin mineral oil and post-consumer mineral oil are qualitatively and mechanically similar.

*Example 3 - preparation of TPV samples*

Some samples of TPV thermoplastic elastomers were prepared.

3.1 The raw materials used to prepare the samples of TPV with post-consumer thermoplastic part (A1) and virgin plasticising agent (B), were:

(A) polymer matrix:

(A1) thermoplastic part: SJP615 100% Post-Consumer Polypropylene marketed by St. Joseph Plastics, with MFI 10 g / 10 min at 230°C and 2.16 kg;
(A2) elastomeric part: EPDM Vlstalon 3702 rubber marketed by Exxonmobil Corporation;

(B) plasticiser agents: Primol 352 mineral oil marketed by ExxonMobil;
(C) additives:

Irganox®1076 marketed by Ciba;
Irgafos®168 marketed by Ciba;
Other: Trigonox® 101-40D, Trigonox® 145-45B, Perkadox® 14-40B, Triallylcyanurate (TAC) marketed by Akzo Nobel Polymer Chemicals B.V.

Polypropylene has a percentage of post-consumer material equal to 100% by weight with respect to the total weight of the thermoplastic part (A1) present.
The formulations, which were prepared by means of a twin-screw mixer/extruder, are reported in table 4 below.

**TABLE 4**

| | THERMOPLASTIC ELASTOMER 4A | | | THERMOPLASTIC ELASTOMER 5A | | | THERMOPLASTIC ELASTOMER 6A | | |
|---|---|---|---|---|---|---|
| TYPE | COMPONENT | % BY WEIGH T | COMPONENT | % BY WEIGH T | COMPONENT | % BY WEIGHT |
| A1 | Polypropylene | 19.4 | Polypropylene | 19.2 | Polypropylene | 19.2 |
| A2 | EPDM | 38.7 | EPDM | 38.7 | EPDM | 38.3 |
| B | Mineral oil | 38.7 | Mineral oil | 38.7 | Mineral oil | 38.3 |
| C stabilising agent | Irganox | 0.2 | Irganox | 0.2 | Irganox | 0.2 |
| C stabilising agent | Irgafos | 0.2 | Irgafos | 0.2 | Irgafos | 0.2 |
| C Other | // | 2.8 | // | 3 | // | 2.8 |
| % post-consumer material | / | 19.4 | / | 19.2 | / | 19.2 |

3.2 The raw materials used to prepare the samples of TPV with thermoplastic part (A1) and post-consumer plasticising agent (B), were:

- for components A (A1, A2), C: reference shall be made to par. 3.1;
- component B: ORV 150 mineral oil marketed by Bergoil.

The formulations, which were prepared by means of a twin-screw mixer/extruder, are the same as in table 4.

Therefore, the thermoplastic elastomer 4B, thermoplastic elastomer 5B, thermoplastic elastomer 6B samples respectively corresponding to the thermoplastic elastomer 4A, thermoplastic elastomer 5A, thermoplastic elastomer 6A samples were obtained, with the use of post-consumer oil in a percentage equal to 100% by weight with respect to the total weight of the plasticising agent (B) present.

Therefore, the percentages of post-consumer material present in samples 4B, 5B, 6B are obtained from the sum of the content by weight of the thermoplastic part (A1) and the plasticising agent (B), as reported in table 5:

**TABLE 5**

| TYPE | THERMOPLASTIC ELASTOMER 4B | | THERMOPLASTIC ELASTOMER 5B | | THERMOPLASTIC ELASTOMER 6B | |
|---|---|---|---|---|---|---|
| | COMPONENT | % BY WEIGHT | COMPONENT | % BY WEIGHT | COMPONENT | % BY WEIGHT |
| A1 | Polypropylene | 19.4 | Polypropylene | 19.2 | Polypropylene | 19.2 |
| B | Mineral oil | 38.7 | Mineral oil | 38.7 | Mineral oil | 38.3 |
| % post-consumer material | / | 58.1 | / | 58 | / | 57.5 |

*Example 4 - comparison of qualitative and mechanical characteristics between the TPV samples with virgin and post-consumer oil*

The samples described in paragraphs 3.1 and 3.2 of example 3 were compared in terms of:

- density according to the EN ISO 1183 standard;
- Sh A hardness according to the EN ISO 868 standard;
- tensile strength according to the ASTM D 638 standard;
- elongation at break according to the ASTM D 638 standard.

The results are reported in table 6:

**TABLE 6**

| SAMPLE | DENSITY (g/cm$^3$) | HARDNESS (Sh A) | TENS. STRENGTH (MPa) | ELONGATION AT BREAK (%) |
|---|---|---|---|---|
| 4 A | 0.97 | 61 | 4.2 | 455 |
| 5 A | 0.97 | 63 | 4.5 | 440 |
| 6 A | 0.97 | 61 | 4.7 | 472 |
| 4B | 0.97 | 62 | 4.3 | 434 |
| 5B | 0.97 | 61 | 4.4 | 445 |
| 6B | 0.97 | 63 | 4.1 | 461 |

According to the relative standards, the aforementioned parameters have the following variability tolerance:

density: $\pm$ 0.02 g/cm3

hardness: ± 3 Sh A
tensile strength: ± 5%
elongation at break: ± 5%

Therefore, also in this case, the samples obtained with virgin mineral oil and post-consumer mineral oil are qualitatively and mechanically similar.

*Example 5 - Preparation of hoses*

*5.1 MONOLAYER FLEXIBLE HOSE*

*5.1.1 Monolayer flexible hose made of TPE-S*

*5.1.1.1 Sample whose monolayer is made of post-consumer polypropylene alone (par. 1.1)*

1 sample (M1A) of 10 m of hose was prepared using - as raw material - the thermoplastic elastomer 1A to make the monolayer **10.**
The hose was manufactured in a per se known manner by extruding the monolayer by means of an extruder of the per se known type.
The hose has an inner diameter of 12.25 mm.

*5.1.1.2 Sample whose monolayer is made of post-consumer polypropylene and post-consumer mineral oil (par. 1.2)*

1 sample (M1B) of 10 m of hose was prepared using - as raw material - the thermoplastic elastomer 1B to make the monolayer **10.**
The hose was manufactured in a per se known manner by extruding the monolayer by means of an extruder of the per se known type.
The hose has an inner diameter of 12.25 mm.

*5.1.2 Monolayer flexible hose made of TPV*

*5.1.2.1 Sample whose monolayer is made of post-consumer polypropylene alone (par. 3.1)*

1 sample (M2A) of 10 m of hose was prepared using - as raw material - the thermoplastic elastomer 4A to make the monolayer **10.**
The hose was manufactured in a per se known manner by extruding the monolayer by means of an extruder of the per se known type.
The hose has an inner diameter of 12.25 mm.

*5.1.2.2 Sample whose monolayer is made of the elastomer with post-consumer polypropylene and post-consumer mineral oil*

1 sample (M2B) of 10 m of hose was prepared using - as raw material - the thermoplastic elastomer 4B to make the monolayer **10.**
The hose was manufactured in a per se known manner by extruding the monolayer by means of an extruder of the per se known type.
The hose has an inner diameter of 12.25 mm.

*5.2 MULTILAYER REINFORCED FLEXIBLE HOSE MADE OF TPE-S*

*5.2.1 Samples whose layers are made of post-consumer polypropylene alone (par. 1.1), wherein the reinforcement layer is made of virgin material*

3 samples (1A, 2A, 3A) of 10 m of hose were prepared using the following raw materials:

- inner layer **10:** thermoplastic elastomer 1A;
- outer layer **20:** thermoplastic elastomer 1A;
- reinforcement layer **30:**

PET 1100 dtex Z100 marketed by Brilen;
PP 1200 DN Z30 marketed by Industrias Ponsa S.A.

The hoses were made in a per se known manner by extruding the inner layer and outer layer by means of an extruder of the per se known type and by providing - on the inner layer - a knitted layer with tricot-type chain stitches of the NTS® type (Samples 1A and 3A) or a cross-hatched layer (Sample 2A) by means of a knitting or cross-hatching machine of the per se known type.

The percentage by weight distribution in the three samples is reported in table 7:

**TABLE 7**

| SAMPLE | REINFORCEMENT LAYER | INTERNAL DIA | INN LAYER. | REINF. LAYER | OUT. LAYER |
|--------|---------------------|--------------|------------|--------------|------------|
|        |                     | mm           | %          | %            | %          |
| 1 A    | Knitted PET         | 11.24        | 57         | 3            | 40         |
| 2 A    | Cross-hatched PP    | 12.35        | 57         | 3            | 40         |
| 3 A    | Knitted PP          | 12.27        | 57         | 3            | 40         |

*5.2.2 Samples whose layers are made of post-consumer polypropylene and post-consumer mineral oil (par. 1.2), wherein the reinforcement layer is made of virgin material*

3 samples (1B, 2B, 3B) of 10 m of hose were prepared using the following raw materials:

- inner layer **10:** thermoplastic elastomer 1B;
- outer layer **20:** thermoplastic elastomer 1B;
- reinforcement layer **30:**

PET 1100 dtex Z100 marketed by Brilen;
PP 1200 DN Z30 marketed by Industrias Ponsa S.A.

The hoses were made in a per se known manner by extruding the inner layer and outer layer by means of an extruder of the per se known type and by providing - on the inner layer - a knitted layer with tricot-type chain stitches of the NTS® type (Samples 1B and 3B) or a cross-hatched layer (Sample 2B) by means of a knitting or cross-hatching machine of the per se known type.

The characteristics and percentage by weight distribution in the three samples are the same as reported in table 7.

*5.2.3 Samples whose layers are made of post-consumer polypropylene and post-consumer mineral oil (par. 1.2), wherein the reinforcement layer contains 30% by weight of post-consumer material*

3 samples (1C, 2C, 3C) of 10 m of hose were prepared using the following raw materials:

- inner layer **10:** thermoplastic elastomer 1B;
- outer layer **20:** thermoplastic elastomer 1B;
- reinforcement layer **30:**

Post-consumer PET GLE-R 1100 DTEX marketed by Brilen;
PP 1000 DN High Tenacity TANG marketed by Industrias Ponsa S.A. containing 30% by weight of post-consumer polypropylene.

The hoses were made in a per se known manner by extruding the inner layer and outer layer by means of an extruder of the per se known type and by providing - on the inner layer - a knitted layer with tricot-type chain stitches of the NTS® type (Samples 1C and 3C) or a cross-hatched layer (Sample 2C) by means of a knitting or cross-hatching machine of the per se known type.

The characteristics and percentage by weight distribution in the three samples are the same as reported in table 7.

### 5.3 MULTILAYER REINFORCED FLEXIBLE HOSE MADE OF TPV

#### 5.3. 1 Sample whose layers are made of post-consumer polypropylene alone (par. 3.1), wherein the reinforcement layer is made of virgin material

1 sample (5A) of 10 m of hose was prepared using the following raw materials:

- inner layer **10:** thermoplastic elastomer 4A;
- outer layer **20:** thermoplastic elastomer 4A;
- reinforcement layer **30:** PP 1200 DN Z30 marketed by Industrias Ponsa S.A.

The hose was made in a per se known manner by extruding the inner layer and outer layer by means of an extruder of the per se known type and by providing - on the inner layer - a cross-hatched layer by means of cross-hatching machine of the per se known type.

The hose has an inner diameter of 12.27 mm.

The percentage by weight distribution is as follows:

- inner layer **10:** 57%;
- outer layer **20:** 40%;
- reinforcement layer **30:** 3%.

#### 5.3.2 Sample whose layers are made of post-consumer polypropylene and post-consumer mineral oil, wherein the reinforcement layer is made of virgin material

1 sample (5B) of 10 m of hose was prepared using the following raw materials:

- inner layer **10:** thermoplastic elastomer 4B
- outer layer **20:** thermoplastic elastomer 4B;
- reinforcement layer **30:** PP 1200 DN Z30 marketed by Industrias Ponsa S.A.

The hose was made in a per se known manner by extruding the inner layer and outer layer by means of an extruder of the per se known type and by providing - on the inner layer - a cross-hatched layer by means of cross-hatching machine of the per se known type.

The hose has an inner diameter of 12.27 mm.

The percentage by weight distribution is as follows:

- inner layer **10:** 57%;
- outer layer **20:** 40%;
- reinforcement layer **30:** 3%.

#### 5.3.3 Sample whose layers are made of post-consumer polypropylene and post-consumer mineral oil, wherein the reinforcement layer contains 30% by weight of post-consumer material

1 sample (5C) of 10 m of hose was prepared using the following raw materials:

- inner layer **10:** thermoplastic elastomer 4B;
- outer layer **20:** thermoplastic elastomer 4B;
- reinforcement layer **30:** PP 1000 DN High Tenacity TANG marketed by Industrias Ponsa S.A. containing 30% by weight of post-consumer polypropylene.

The hose was made in a per se known manner by extruding the inner layer and outer layer by means of an extruder of the per se known type and by providing - on the inner layer - a cross-hatched layer by means of cross-hatching machine of the per se known type.

The hose has an inner diameter of 12.27 mm.

The percentage by weight distribution is as follows:

- inner layer **10:** 57%;
- outer layer **20:** 40%;

- reinforcement layer **30**: 3%.

## 5.4 SPIRALLED FLEXIBLE HOSE MADE OF TPE-S

### 5.4. 1 Sample whose wall is made of post-consumer polypropylene alone (par. 1.1), wherein the reinforcement spiral is made of post-consumer material

1 sample (6A) of 10 m of hose was prepared using the following raw materials:

- wall **100**: thermoplastic elastomer 1A;
- reinforcement spiral **300**: SJP615 100% Post-Consumer Polypropylene marketed by St. Joseph Plastics, with MFI 10 g / 10 min at 230°C and 2.16 kg.

The polypropylene of the reinforcement spiral **300** has a percentage of post-consumer material equal to 100% by weight.

The hose was made in a per se known manner by co-extruding the reinforcement spiral **300** and the wall **100** by means of an extruder of the per se known type and by spiral-winding the webbing on a spindle joining the side walls thereof to obtain the layer **10** which forms the hose **1**.

The hose has an inner diameter of 38 mm.

The percentage by weight distribution is as follows:

- wall **100**: 50%;
- reinforcement spiral **300**: 50%.

### 5.4.2 Sample whose wall is made of post-consumer polypropylene and post-consumer mineral oil (par. 1.2), wherein the reinforcement spiral is made of post-consumer material

1 sample (6B) of 10 m of hose was prepared using the following raw materials:

- wall **100**: thermoplastic elastomer 1B;
- reinforcement spiral **300**: SJP615 100% Post-Consumer Polypropylene marketed by St. Joseph Plastics, with MFI 10 g / 10 min at 230°C and 2.16 kg.

The polypropylene of the reinforcement spiral **300** has a percentage of post-consumer material equal to 100% by weight.

The hose was made in a per se known manner by co-extruding the reinforcement spiral **300** and the wall **100** by means of an extruder of the per se known type and by spiral-winding the webbing on a spindle joining the side walls thereof to obtain the layer **10** which forms the hose **1.**

The hose has an inner diameter of 38 mm.

The percentage by weight distribution is as follows:

- wall **100**: 50%;
- reinforcement spiral **300**: 50%.

## 5.5 SPIRALLED FLEXIBLE HOSE MADE OF TPV

### 5.5. 1 Sample whose wall is made of post-consumer polypropylene alone (par. 3.1), wherein the reinforcement spiral is made of post-consumer material

1 sample (7A) of 10 m of hose was prepared using the following raw materials:

- wall **100**: thermoplastic elastomer 4A;
- reinforcement spiral **300**: SJP615 100% Post-Consumer Polypropylene marketed by St. Joseph Plastics, with MFI 10 g / 10 min at 230°C and 2.16 kg.

The polypropylene of the reinforcement spiral **300** has a percentage of post-consumer material equal to 100% by weight.

The hose was made in a per se known manner by co-extruding the reinforcement spiral **300** and the wall **100** by means of an extruder of the per se known type and by spiral-winding the webbing on a spindle joining the side walls thereof to obtain the layer **10** which forms the hose **1.**

The hose has an inner diameter of 38 mm.

The percentage by weight distribution is as follows:

- wall **100:** 50%;
- reinforcement spiral **300:** 50%.

*5.5.2 Sample whose wall is made of post-consumer polypropylene and post-consumer mineral oil (par. 3.2), wherein the reinforcement spiral is made of post-consumer material*

1 sample (7B) of 10 m of hose was prepared using the following raw materials:

- wall **100:** thermoplastic elastomer 4B;
- reinforcement spiral **300:** SJP615 100% Post-Consumer Polypropylene marketed by St. Joseph Plastics, with MFI 10 g / 10 min at 230°C and 2.16 kg.

The polypropylene of the reinforcement spiral **300** has a percentage of post-consumer material equal to 100% by weight.

The hose was made in a per se known manner by co-extruding the reinforcement spiral **300** and the wall **100** by means of an extruder of the per se known type and by spiral-winding the webbing on a spindle joining the side walls thereof to obtain the layer **10** which forms the hose **1.**

The hose has an inner diameter of 38 mm.

The percentage by weight distribution is as follows:

- wall **100:** 50%;
- reinforcement spiral **300:** 50%.

*Example 6 - Mechanical analysis of monolayer flexible hoses*

Some tests were carried out in order to mechanically evaluate the aforementioned samples. In particular, samples made of TPE-s or TPV with post-consumer polypropylene and polypropylene and post-consumer oil were analysed and compared.

Given that the single-layer hoses by definition are not resistant to use under pressure, the minimum radius of curvature test according to the ISO 10619-1 standard combined with an internal method was the mechanical test used.

The value of the minimum radius of curvature of each sample, that is the radius of curvature resulting in a 20% decrease in the outer diameter of the hose, was therefore evaluated.

The test is carried out under vacuum conditions (900 mbar).

The results are reported in Table 8:

**TABLE 8**

| Sample | Minimum radius of curvature (mm) |
|--------|----------------------------------|
| M1A | 60 |
| M1B | 60 |
| M2A | 60 |
| M2B | 60 |

Therefore, the reported data show that the samples obtained with the post-consumer polypropylene alone and the samples obtained with post-consumer polypropylene and mineral oil are mechanically similar.

Furthermore, it is clear that all the samples made passed the proposed tests with an ensuing excellent mechanical performance.

*Example 7 - Mechanical analysis of reinforced flexible hoses*

Some tests were carried out in order to mechanically evaluate the aforementioned samples. In particular, samples made of TPE-s or TPV with post-consumer polypropylene, polypropylene and post-consumer oil, post-consumer polypropylene, oil and yarn, were analysed and compared.

The mechanical tests used were as follows:

- pressure sealing test with standard quick-coupling fittings for garden hoses according to the UNI EN ISO 1402 standard;
- burst test according to the UNI EN ISO 1402 standard;
- cyclic test, by means of an internal method: subsequent test cycles, each of which envisages subjecting the hose to 8 bars for a period of time equal to 25 seconds and subsequently suspending such action for a period of time equal to 5 seconds are carried out. When the hose resists for more than 10000 cycles, the test is deemed to have been passed.

The results are reported in Table 9 (samples made of TPE-s) and in Table 10 (samples made of TPV).

*7.1 Reinforced multilayer flexible hoses made of TPE-s*

**TABLE 9**

| Sample | Pressure sealing test with Standard Fittings | | | Burst | | | Cyclic test |
|---|---|---|---|---|---|---|---|
| | 8 bars | 12 bars | 16 bars | Burst @ 23°C [bar] | System with Standard Fittings @ 23°C [bar] | Results at burst | |
| 1 A | **PASSED** | **PASSED** | **PASSED** | 28.3 | 23.1 | Yarn failure | **> 10000** |
| 2 A | **PASSED** | **PASSED** | **PASSED** | 27.9 | 23.4 | Yarn and material failure near fitting | **> 10000** |
| 3 A | **PASSED** | **PASSED** | **PASSED** | 27.5 | 24.4 | Yarn failure | **> 10000** |
| 1B | **PASSED** | **PASSED** | **PASSED** | 28.5 | 23.0 | Yarn failure | **> 10000** |
| 2B | **PASSED** | **PASSED** | **PASSED** | 28.1 | 23.2 | Yarn and material failure near fitting | **> 10000** |
| 3B | **PASSED** | **PASSED** | **PASSED** | 27.2 | 24.1 | Yarn failure | **> 10000** |
| 1C | **PASSED** | **PASSED** | **PASSED** | 28.1 | 22.9 | Yarn failure | **> 10000** |
| 2C | **PASSED** | **PASSED** | **PASSED** | 27.8 | 23.6 | Yarn and material failure near fitting | **> 10000** |
| 3C | **PASSED** | **PASSED** | **PASSED** | 27.7 | 24.2 | Yarn failure | **> 10000** |

Therefore, the samples obtained with post-consumer polypropylene alone (1A, 2A, 3A), the samples obtained with post-consumer polypropylene and mineral oil (1B, 2B, 3B) and the samples obtained with post-consumer polypropylene, mineral oil and reinforcement layer (1C, 2C, 3C) are mechanically similar. regardless of the presence of a cross-hatched or knitted reinforcement layer.

Furthermore, it is clear that all the samples made passed the proposed tests with an ensuing excellent mechanical performance.

*7.2 Reinforced multilayer flexible hoses made of TPV*

**TABLE 10**

| Sample | Pressure sealing test with Standard Fittings | | | Burst | | | Cyclic test |
|---|---|---|---|---|---|---|---|
| | 8 bars | 12 bars | 16 bars | Burst @ 23°C [bar] | System with Standard Fittings @ 23°C [bar] | Results at burst | 10 bars peak 8 bar maintenan ce |
| 5 A | **PASSED** | **PASSED** | **PASSED** | 30.7 | 25.1 | Yarn failure | **> 10000** |
| 5B | **PASSED** | **PASSED** | **PASSED** | 32.2 | 24.2 | Yarn failure | **> 10000** |
| 5C | **PASSED** | **PASSED** | **PASSED** | 32.5 | 23.9 | Yarn failure | **> 10000** |

Therefore, even in this case, the samples obtained with post-consumer polypropylene alone, the samples obtained with post-consumer polypropylene and mineral oil and the samples obtained with post-consumer polypropylene, mineral oil and reinforcement layer are mechanically similar.

Furthermore, even in this case it is clear that all the samples made passed the proposed tests with an ensuing excellent mechanical performance.

*Example 8 - Mechanical analysis of spiralled flexible hoses*

Some tests were carried out in order to mechanically evaluate the aforementioned samples. In particular, samples made of TPE-s or TPV with post-consumer polypropylene and polypropylene and post-consumer oil were analysed and compared.

The mechanical tests used were as follows:

- burst test according to the UNI EN ISO 1402 standard;
- minimum radius of curvature test according to the internal method and the ISO 10619-1 standard, as reported above (*example 6*).

In particular, the burst test evaluates the elongation values of the hose (ΔL) after 10 min at 3 bars at 23°C, after 10 and 30 min at 3 bars at 60°C and the subsequent respective burst pressure with the annexed burst results.

The results are reported in Table 11 (burst test at 23°C), Table 12 (burst test at 60°C), Table 13 (minimum radius of curvature test):

**TABLE 11**

| Sample | Burst | | |
|---|---|---|---|
| | ΔL 10' @ 3 bar (%) | Burst @ 23°C [bar] | Results at burst |
| 6 A | 4.38 | 10.90 | Reinforcement spiral failure |
| 6B | 4.25 | 11.09 | Reinforcement spiral failure |
| 7 A | 4.35 | 10.93 | Reinforcement spiral failure |
| 7B | 4.12 | 10.85 | Reinforcement spiral failure |

**TABLE 12**

| Sample | Burst | | | |
|---|---|---|---|---|
| | ΔL 10' @ 3 bar (%) | ΔL 30' @ 3 bar (%) | Burst @ 60°C [bar] | Results at burst |
| 6 A | 4.25 | 10.65 | 7.15 | Reinforcement spiral failure |
| 6B | 4.32 | 10.38 | 6.98 | Reinforcement spiral failure |

(continued)

| Sample | Burst | | | |
|---|---|---|---|---|
| | ΔL 10' @ 3 bar (%) | ΔL 30' @ 3 bar (%) | Burst @ 60°C [bar] | Results at burst |
| 7 A | 4.08 | 10.42 | 7.26 | Reinforcement spiral failure |
| 7B | 4.22 | 10.18 | 6.99 | Reinforcement spiral failure |

TABLE 13

| Sample | Minimum radius of curvature (mm) |
|---|---|
| 6 A | 181.8 |
| 6B | 181.2 |
| 7 A | 182.6 |
| 7B | 183.5 |

Therefore, even in this case, the samples obtained with post-consumer polypropylene alone, the samples obtained with post-consumer polypropylene and mineral oil and the samples obtained with post-consumer polypropylene, mineral oil and reinforcement spiral have a mechanically similar behaviour.

Furthermore, it is clear that all the samples made passed the proposed tests with an ensuing excellent mechanical performance.

**Claims**

1. The use of a thermoplastic elastomer for manufacturing at least one layer (**10**) of a reinforced or spiralled flexible hose (**1**) for transporting fluids, in particular liquids, the thermoplastic elastomer consisting of:

(A) at least 30% by weight of a polymer matrix consisting of a first thermoplastic part (A1) and a second elastomeric part (A2), said first thermoplastic part (A1) and second elastomeric part (A2) being present in the thermoplastic elastomer in a weight percentage respectively from 10% by weight to 35% by weight and from 20% by weight to 45% by weight;
(B) from 30% by weight to 55% by weight of at least one plasticising agent;
(C) from 0% by weight to 30% by weight of at least one filler;
(D) from 0% by weight to 10% by weight of at least one additive;
wherein the total sum of the % by weight of said components from (A) to (D) is 100%;
wherein the % by weight of said components from (A) to (D) are calculated with respect to the total weight of the thermoplastic elastomer;
wherein the thermoplastic elastomer has a Shore A hardness measured according to the UNI EN ISO 868 standard comprised between 50 Sh A and 85 Sh A;
wherein the thermoplastic elastomer is in an amount greater than or equal to 90% by weight on the total weight of the flexible hose;
**characterized in that** the thermoplastic elastomer has a percentage of post-consumer material according to the UNI EN ISO 14021 and UNI EN 15343 standards greater than or equal to 50% by weight calculated with respect to the total weight of the thermoplastic elastomer.

2. Use according to claim 1, wherein said plasticising agent (B) is at least partially post-consumer material according to the UNI EN ISO 14021 and UNI EN 15343 standards or said first thermoplastic part (A1) and said at least one plasticising agent (B) are at least partially post-consumer materials according to the UNI EN ISO 14021 and UNI EN 15343 standards.

3. Use according to claim 1 or 2, wherein said at least one plasticising agent (B) is a mineral oil.

4. Use according to any one of the preceding claims, wherein said thermoplastic elastomer is selected from: TPE-S wherein said first thermoplastic part (A1) is polypropylene or polyethylene, said second elastomeric part (A2) being SEBS or SBS or SEPS or SEEPS or SIPS or SIS; TPV wherein said first thermoplastic part (A1) is polypropylene, said second elastomeric part (A2) being EPDM; TPE-O, POE or POP, wherein said thermoplastic part (A1) is polypropylene or polyethylene, said elastomeric part (A2) being butene or linear alpha olefins or a polypropylene elastomer produced by metallocene catalysis.

5. Use according to any one of the preceding claims, wherein said first thermoplastic part (A1) is in an amount comprised between 15% by weight and 25% by weight with respect to the total weight of the thermoplastic elastomer, said second elastomeric part (A2) being is in an amount comprised between 25% by weight and 35% by weight with respect to the total weight of the thermoplastic elastomer.

6. Use according to any one of the preceding claims, wherein said at least one plasticising agent (B) is in an amount comprised between 30% by weight and 40% by weight with respect to the total weight of the thermoplastic elastomer.

7. Use according to any one of the preceding claims, wherein said thermoplastic elastomer has a Shore A hardness measured according to the UNI EN ISO 868 standard comprised between 65 Sh A and 75 Sh A.

8. A flexible hose for transporting fluids in particular liquids, which includes at least one first layer (10) made of said thermoplastic elastomer according to any one of claims 1 to 7, wherein the percentage of post-consumer material of the hose according to the UNI EN ISO 14021 and UNI EN 15343 standards is greater than or equal to 45%, said thermoplastic elastomer being in an amount greater than or equal to 90% by weight on the total weight of the flexible hose.

9. Flexible hose according to the preceding claim, wherein the hose is of the reinforced type, said at least one first layer (10) being in contact with the fluid to be transported, the flexible hose further comprising at least one second outer layer (20) susceptible to be gripped by a user made of a second thermoplastic elastomer, the flexible hose further comprising at least one textile reinforcement layer (30) interposed between said at least one first layer and at least one second layer (10, 20), said second thermoplastic elastomer preferably being the thermoplastic elastomer according to any one of claims 1 to 7.

10. Flexible hose according to the preceding claim, wherein said at least one textile reinforcement layer (30) is made of a virgin polymeric or post-consumer material according to the UNI EN ISO 14021 and UNI EN 15343 standards.

11. Flexible hose according to claim 8, wherein the hose is of the spiralled type, further comprising at least one reinforcement spiral (300) embedded in said at least one first layer (10).

12. Flexible hose according to claim 11, wherein said first layer (10) includes of consists of a wall (100) into which said reinforcement spiral (300) is embedded, said wall (100) being made of the thermoplastic elastomer claimed in one or more of claims 1 to 7.

13. Flexible hose according to claim 11 or 12, wherein said at least one reinforcement spiral (300) is made of a polymeric material, at least partially post-consumer according to the UNI EN ISO 14021 and UNI EN 15343 standards, said percentage of post-consumer material of the hose being greater than or equal to 70%.

14. A method for manufacturing a flexible hose according to claim 8, comprising a step for extruding said at least one first layer (10).

15. Method according to the preceding claim, wherein the hose is according to claims 9 or 10, wherein when carrying out said extrusion step said at least one first layer (10) has a tubular shape, the method further including a step for manufacturing at least one reinforcement layer (30) above said at least one first layer (10) and furthermore a further step for extruding at least one second layer (20) in a second thermoplastic elastomer above said at least one reinforcement layer (30), said second thermoplastic elastomer preferably being the thermoplastic elastomer claimed in one or more of claims 1 to 7.

16. Method according to claim 14, wherein the hose is according to claims 11, 12 or 13, wherein when carrying out said extrusion step there is obtained a webbing having a core consisting of said at least one reinforcement spiral (300) and a wall (100) made of the thermoplastic elastomer claimed in one or more of claims 1 to 7, said webbing being spiral-wound on a spindle to obtain said at least one first layer (10) into which said at least one reinforcement spiral (**300**) is embedded.

**Patentansprüche**

1. Verwendung eines thermoplastischen Elastomers zur Herstellung wenigstens einer Schicht (10) eines verstärkten oder spiralförmigen flexiblen Schlauchs (1) für den Transport von Fluiden, insbesondere für den Transport von Flüssigkeiten, das thermoplastische Elastomer bestehend aus:

    (A) wenigstens 30 Gewichtsprozent einer Polymermatrix bestehend aus einem ersten thermoplastischen Teil (A1) und einem zweiten Elastomer Teil (A2), wobei der erste thermoplastische Teil (A1) und der zweite Elastomer Teil (A2) in dem thermoplastischen Elastomer mit einem Gewichtsanteil jeweils von 10 bis 35 Gewichtsprozent und von 20 bis 45 Gewichtsprozent enthalten sind;
    (B) von 30 bis 55 Gewichtsprozent wenigstens einer Plastifizier Hilfe;
    (C) von 0 bis 30 Gewichtsprozent wenigstens eines Füllstoffs;
    (D) von 0 bis 10 Gewichtsprozent wenigstens eines Additivs;
    wobei die Summe der Gewichtsprozente der Bestandteile von (A) bis (D) 100 % beträgt;
    wobei die Gewichtsanteile der Komponenten von (A) bis (D) bezogen auf das Gesamtgewicht des thermoplastischen Elastomers berechnet sind;
    wobei das thermoplastische Elastomer eine Shore A Härte gemessen nach dem Standard UNI EN ISO 868 zwischen 50 Sh A und 85 Sh A aufweist;
    wobei das thermoplastische Elastomer einen Betrag von größer oder gleich 90 Gewichtsprozent an dem Gesamtgewicht des flexiblen Schlauchs ausmacht;
    **dadurch gekennzeichnet, dass** das thermoplastische Elastomer einen Anteil eines Recyclingmaterials entsprechend den UNI EN ISO 14021 und UNI EN 15343 Standards von größer oder gleich 50 Gewichtsprozent bezogen auf das Gesamtgewicht des thermoplastischen Elastomers aufweist.

2. Verwendung nach Anspruch 1, wobei die Plastifizier Hilfe (B) wenigstens teilweise ein Recyclingmaterial gemäß den UNI EN ISO 14021 und UNI EN 15343 Standards ist oder der erste thermoplastische Teil (A1) und die wenigstens eine Plastifizier Hilfe (B) wenigstens teilweise Recyclingmaterialien nach den UNI EN ISO 14021 und UNI EN 15343 Standards sind.

3. Verwendung nach einem der Ansprüche 1 und 2, bei welcher die wenigstens eine Plastifizier Hilfe (B) ein Mineralöl ist.

4. Verwendung nach einem der vorhergehenden Ansprüche, bei welcher das thermoplastische Elastomer ausgewählt ist aus: TPE-S, wobei der erste thermoplastische Teil (A1) ein Polypropylen oder ein Polyethylen ist, der zweite elastomere Teil (A2) ein SEBS oder SBS oder SEPS oder SEEPS oder SIPS oder SIS ist; TPV wobei der erste thermoplastische Teil (A1) ein Polypropylen ist, wobei der zweite elastomere Teil (A2) ein EPDM; TPE-O, POE oder POP ist, wobei der thermoplastische Teil (A1) ein Polypropylen oder ein Polyethylen ist, der zweite elastomere Teil (A2) ein EPDM:TPE-O,POE oder POP ist; wobei der thermoplastische Teil (A1) ein Polypropylen oder Polyethylen ist, wobei der elastomere Teil (A2) ein Buten oder lineares Alpha Olefin oder ein Polypropylen Elastomer mehr ist, welches durch Metallocen Katalyse erhalten wurde.

5. Verwendung nach einem der vorstehenden Ansprüche, bei welcher der erste thermoplastische Teil (A1) einen Anteil zwischen 15 Gewichtsprozent und 25 Gewichtsprozent bezogen auf das Gesamtgewicht des thermoplastischen Elastomers umfasst, wobei der zweite elastomere Teil (A2) einen Anteil zwischen 25 Gewichtsprozent und 35 Gewichtsprozent bezogen auf das Gesamtgewicht des thermoplastischen Elastomers umfasst.

6. Verwendung nach einem der vorhergehenden Ansprüche, wobei die wenigstens eine Plastifizier Hilfe (B) einen Anteil zwischen 30 bis 40 Gewichtsprozent bezogen auf das Gesamtgewicht des thermoplastischen Elastomers umfasst.

7. Verwendung nach einem der vorhergehenden Ansprüche, wobei das thermoplastische Elastomer eine Shore A Härte gemessen nach dem UNI EN ISO 868 Standard zwischen 65 Sh A und 75 Sh A aufweist.

8. Flexibler Schlauch zum Transportieren von Fluiden, insbesondere von Flüssigkeiten, der wenigstens eine erste Schicht (10) aus dem thermoplastischen Elastomer gemäß einem der Ansprüche 1 bis 7 umfasst, wobei der Anteil des Recyclingmaterials des Schlauches gemäß den UNI EN ISO 14021 und UNI EN 15343 Standards größer oder gleich 45 % beträgt, wobei das thermoplastische Elastomer einen Anteil von größer/gleich 90 Gewichtsprozent des Gesamtgewichts des flexiblen Schlauchs aufweist.

9.  Flexibler Schlauch nach dem vorhergehenden Anspruch, wobei der Schlauch als verstärkter Schlauch ausgebildet ist, wobei die wenigstens eine Schicht (10) in Kontakt mit dem zu transportierenden Fluid ist, wobei der flexible Schlauch weiterhin eine zweite äußere Schicht (20) aus einem zweiten thermoplastischen Elastomer umfasst, die dazu ausgebildet ist, durch einen Benutzer gegriffen zu werden, wobei der flexible Schlauch weiterhin wenigstens eine textile Verstärkungsschicht (30) umfasst, die zwischen der ersten und der zweiten Schicht (10,20) angeordnet ist, wobei das zweite thermoplastische Elastomer vorzugsweise ein thermoplastisches Elastomer nach einem der Ansprüche 1 bis 7 ist.

10. Flexibler Schlauch nach dem vorhergehenden Anspruch, bei welchem die wenigstens eine textile Verstärkungsschicht (30) aus einem jungfräulichen Polymer oder einem Recyclingmaterial entsprechend den UNI EN ISO 14021 und UNI EN 15343 Standards ist.

11. Flexibler Schlauch nach Anspruch 8, bei welchem der Schlauch ein spiralförmiger Schlauch ist, weiterhin umfassend wenigstens eine Verstärkungswendel (300), welche in die erste Schicht (10) eingebettet ist.

12. Flexibler Schlauch nach Anspruch 11, bei welchem die erste Schicht (10) eine Wand (100) umfasst oder aus einer Wand besteht, in welche die Verstärkungswendel (300) eingebettet ist, wobei die Wand (100) aus dem thermoplastischen Elastomer gemäß einem der Ansprüche 1 bis 7 ausgebildet ist.

13. Flexibler Schlauch nach einem der Ansprüche 11 oder 12, bei welchem die wenigstens eine Verstärkungswendel (300) aus einem Polymer hergestellt ist, wenigstens teilweise als Recyclingmaterial gemäß den UNI EN ISO 14021 und UNI EN 15343 Standards, wobei der Anteil des Recyclingmaterials des Schlauchs größer/gleich 70 % ist.

14. Verfahren zur Herstellung eines flexiblen Schlauchs nach Anspruch 8, umfassend den Schritt des Extrudierens wenigstens einer ersten Schicht (10).

15. Verfahren nach dem vorhergehenden Anspruch, bei welchem der Schlauch gemäß den Ansprüchen 9 oder 10 ausgebildet ist, bei welchem die Durchführung des Schritts der Extrusion der wenigstens einen Schicht (10) in schlauchförmiger Form erfolgt, wobei das Verfahren weiterhin den Schritt des Herstellens der wenigstens einen Verstärkungsschicht (30) oberhalb der wenigstens einen ersten Schicht (10) und weiterhin einen weiteren Schritt zum Extrudieren der zweiten Schicht (20) in einem zweiten thermoplastischen Elastomer oberhalb der ersten Verstärkungsschicht (30) umfasst, wobei das zweite thermoplastische Elastomer vorzugsweise ein thermoplastisches Elastomer gemäß einem oder mehrerer der Ansprüche 1 bis 7 ist.

16. Verfahren nach Anspruch 14, bei welchem der Schlauch gemäß den Ansprüchen 11,12 oder 13 ausgebildet ist, wobei bei der Ausführung des Schritts der Extrusion ein Gewebe mit einem Kern erhalten wird, der wenigstens aus einer Verstärkungswendel (300) und einer Wand (100) aus einem thermoplastischen Elastomer gemäß einem der Ansprüche 1 bis 7 erhalten wird, wobei das Gewebe wendelförmig auf eine Spindel gewickelt ist, um die wenigstens eine erste Schicht (10) zu erhalten in welche die wenigstens eine Verstärkungswendel (300) eingebettet ist.

## Revendications

1.  L'utilisation d'un élastomère thermoplastique permettant de fabriquer au moins une couche (10) d'un tuyau flexible renforcé ou en spirale (1) pour transporter des fluides, en particulier des liquides, l'élastomère thermoplastique comprenant :

    (A) au moins 30 % en poids d'une matrice polymère comprenant une première partie thermoplastique (A1) et une deuxième partie élastomère (A2), lesdites première partie thermoplastique (A1) et deuxième partie élastomère (A2) étant présentes dans l'élastomère thermoplastique dans un pourcentage de poids respectivement de 10 % en poids à 35 % en poids et de 20 % en poids à 45 % en poids ;
    (B) de 30 % en poids à 55 % en poids d'au moins un agent plastifiant ;
    (C) de 0 % en poids à 30 % en poids d'au moins un remplisseur ;
    (D) de 0 % en poids à 10 % en poids d'au moins un additif ;
    dans lequel la somme totale du pourcentage en poids desdits composants de (A) à (D) est 100 % ;

dans lequel le pourcentage en poids desdits composants de (A) à (D) est calculé par rapport au poids total de l'élastomère thermoplastique ;

dans lequel l'élastomère thermoplastique a une dureté Shore A mesurée en fonction de la norme UNI EN ISO 868 comprise entre 50 Sh A et 85 Sh A ;

dans lequel l'élastomère thermoplastique est dans une quantité supérieure ou égale à 90 % en poids sur le poids total du tuyau flexible ;

**caractérisé en ce que** l'élastomère thermoplastique a un pourcentage de matériau de post-consommation en fonction des normes UNI EN ISO 14021 et UNI EN 15343 supérieur ou égal à 50 % en poids calculé par rapport au poids total de l'élastomère thermoplastique.

2. Utilisation selon la revendication 1, dans lequel ledit agent plastifiant (B) est au moins partiellement un matériau de post-consommation en fonction des normes UNI EN ISO 14021 et UNI EN 15343 ou ladite première partie thermoplastique (A1) et ledit au moins un agent plastifiant (B) sont au moins partiellement des matériaux de post-consommation en fonction des normes UNI EN ISO 14021 et UNI EN 15343.

3. Utilisation selon la revendication 1 ou 2, dans lequel ledit au moins un agent plastifiant (B) est une huile minérale.

4. Utilisation selon l'une quelconque des revendications précédentes, dans lequel ledit élastomère thermoplastique est sélectionné à partir de : TPE-S dans lequel ladite première partie thermoplastique (A1) est du polypropylène ou du polyéthylène, ladite deuxième partie élastomère (A2) étant du SEBS ou SBS ou SEPS ou SEEPS ou SIPS ou SIS; TPV dans lequel ladite première partie thermoplastique (A1) est du polypropylène, ladite deuxième partie élastomère (A2) étant de l'EPDM ; TPE-O, POE ou POP, dans lequel ladite partie thermoplastique (A1) est du polypropylène ou du polyéthylène, ladite partie élastomère (A2) étant du butène ou des alpha-oléfines linéaires ou un élastomère polypropylène produit par catalyse métallocène.

5. Utilisation selon l'une quelconque des revendications précédentes, dans lequel ladite première partie thermoplastique (A1) est dans une quantité comprise entre 15 % en poids et 25 % en poids par rapport au poids total de l'élastomère thermoplastique, ladite deuxième partie élastomère (A2) étant dans une quantité comprise entre 25 % en poids et 35 % en poids par rapport au poids total de l'élastomère thermoplastique.

6. Utilisation selon l'une quelconque des revendications précédentes, dans lequel ledit au moins un agent plastifiant (B) est dans une quantité comprise entre 30 % en poids et 40 % en poids par rapport au poids total de l'élastomère thermoplastique.

7. Utilisation selon l'une quelconque des revendications précédentes, dans lequel ledit élastomère thermoplastique a une dureté Shore A mesurée en fonction de la norme UNI EN ISO 868 comprise entre 65 Sh A et 75 Sh A.

8. Un tuyau flexible permettant de transporter des fluides en particulier des liquides, qui comprend au moins une première couche (10) dans ledit élastomère thermoplastique selon l'une quelconque des revendications 1 à 7, dans lequel le pourcentage de matériau de post-consommation du tuyau en fonction des normes UNI EN ISO 14021 et UNI EN 15343 est supérieur ou égal à 45 %, ledit élastomère thermoplastique étant dans une quantité supérieure ou égale à 90 % en poids sur le poids total du tuyau flexible.

9. Tuyau flexible selon la revendication précédente, dans lequel le tuyau est du type renforcé, ladite au moins une première couche (10) étant en contact avec le fluide à transporter, le tuyau flexible comprenant en outre au moins une deuxième couche externe (20) susceptible d'être saisie par un utilisateur et comprenant un deuxième élastomère thermoplastique, le tuyau flexible comprenant en outre au moins une couche de renforcement textile (30) interposée entre lesdites au moins une première couche et au moins une deuxième couche (10, 20), ledit deuxième élastomère thermoplastique étant de préférence l'élastomère thermoplastique selon l'une quelconque des revendications 1 à 7.

10. Tuyau flexible selon la revendication précédente, dans lequel ladite au moins une couche de renforcement textile (30) est composée d'un matériau de post-consommation ou polymère vierge en fonction des normes UNI EN ISO 14021 et UNI EN 15343.

11. Tuyau flexible selon la revendication 8, dans lequel le tuyau est du type en spirale, comprenant en outre au moins une spirale de renforcement (300) intégrée dans ladite au moins une première couche (10).

12. Tuyau flexible selon la revendication 11, dans lequel ladite première couche (10) comprend une paroi (100) dans laquelle ladite spirale de renforcement (100) est intégrée, ladite paroi (100) comprenant l'élastomère thermoplastique selon une ou plusieurs des revendications 1 à 7.

13. Tuyau flexible selon la revendication 11 ou 12, dans lequel ladite au moins une spirale de renforcement (300) est composée d'un matériau polymère, au moins partiellement post-consommateur en fonction des normes UNI EN ISO 14021 et UNI EN 15343, ledit pourcentage de matériau de post-consommation du tuyau étant supérieur ou égal à 70 %.

14. Un procédé de fabrication d'un tuyau flexible selon la revendication 8, comprenant une étape d'extrusion de ladite au moins une première couche (10).

15. Procédé selon la revendication précédente, dans lequel le tuyau est selon les revendications 9 ou 10, dans lequel lors de la mise en oeuvre de ladite étape d'extrusion, ladite au moins une première couche (10) a une forme tubulaire, le procédé comprenant en outre une étape de fabrication d'au moins une couche de renforcement (30) au-dessus de ladite au moins une première couche (10) et en outre une étape supplémentaire d'extrusion d'au moins une deuxième couche (20) dans un deuxième élastomère thermoplastique au-dessus de ladite au moins une couche de renforcement (30), ledit deuxième élastomère thermoplastique étant de préférence l'élastomère thermoplastique selon une ou plusieurs des revendications 1 à 7.

16. Procédé selon la revendication 14, dans lequel le tuyau est selon les revendications 11, 12 ou 13, dans lequel lors de la mise en oeuvre de ladite étape d'extrusion, une sangle est obtenue ayant un coeur comprenant ladite au moins une spirale de renforcement (300) et une paroi (100) comprenant l'élastomère thermoplastique selon une ou plusieurs des revendications 1 à 7, ladite sangle étant enroulée en spirale sur une broche pour obtenir ladite au moins une première couche (10) dans laquelle ladite au moins une spirale de renforcement (300) est intégrée.

**1** → **10**

**FIG. 1**

**1** → **10**

**30**

**20**

**FIG. 2**

FIG. 3

**REFERENCES CITED IN THE DESCRIPTION**

**Patent documents cited in the description**

- WO 2011090759 A2
- US 10578093 B2
- US 2012070597 A
- WO 2019003130 A1
- EP 3233451 B1
- US 2011319548 A1